# EUROPEAN PATENT APPLICATION

(11) **EP 2 983 101 A1**
(43) Date of publication of application: **10.02.2016**
(21) Application number: 14306251.1
(22) Date of filing: 07.08.2014
(51) Int. Cl.: G06F 21/36, H04L 29/06

(54) **Method of accessing a network device**

(71) Applicant: Thomson Licensing, 92130 Issy-les-Moulineaux (FR)
(72) Inventor: Heyrman, Alfons, 9100 Sint-NIklaas (BE)
(74) Representative: Lindemann, Robert

(57) **Abstract**

A method of accessing a first network device from a second network device, includes providing, by the first network device, a login page that can be displayed in a browser program executed on the second network device. The login page has input fields for inputting information about the states of indicators visibly provided at a housing of the first network device, and a submit function for submitting the information about the states of the indicators of the first network device. After receiving a request and upon providing the login page, the first network device controls the states of the indicators to show a first random pattern. A user of the second network device enters the states of the indicators and submits this information through the submit function of the login page. The first network device receives this information and compares the received states of the indicators with the first random pattern. The login is successful if the first random pattern and the received input, representing the states of the indicators, match.

## Description

### FIELD OF THE INVENTION

The present invention pertains to a method of accessing a network device through a login webpage.

### BACKGROUND OF THE INVENTION

Network-connected devices often act as servers, providing webpages or files to users. Access to these servers is usually protected, e.g. by means of a combination of username and password. For accessing the server, a user must enter a username and a password on a login page provided by the server, and only if the combination is correct, access will be granted. The login page may be complemented by other security mechanisms, e.g. being tied to a specific MAC or IP address, which are known to the skilled person and will not be discussed in detail in this specification.

Providing access to a network device over a login webpage brings about the threat of remote attacks from the network carried out by attackers not having a permission to access the network device. Such attacks may for example be carried out by so-called 'brute force' attempts of guessing usernames and corresponding passwords, or through so-called 'social engineering', where an attacker tries to persuade a user to provide a valid username and corresponding password. Many other attacks are conceivable, which can ultimately be carried out as long as a network connection to the network device is present.

Some network devices present login webpages allowing for a user to login, in order to change a configuration of the network device, or perform similar operations. Among this kind of network devices are for example gateways, routers, and the like. These network devices often provide separation between a public network and a private network, providing some level of security against attacks to the device from the public network side. However, attacks from both the public and the private side of the network are still possible, notably in case the network device provides a wireless access, e.g. in accordance with the IEEE802.11 standard. Also, routers and gateways are often provided by network service providers and come with a preset default username and password. Most users are unaware that it is recommended to change the username or password in order to improve security. New generations of gateways or routers have their management interfaces protected by default with an unpredictable, device-specific password, which is programmed into the gateway during production and visible on a label glued to the plastic housing of the gateway. However, cases have been reported where the stickers or labels carrying the gateway's password have been copied before the device was installed at the user's premises. Also, production data might get into the hands of malevolent persons, selling such information to the highest bidder.

Further, the latest security features are provided only in more recently deployed network devices. Millions of network devices, notably gateways, which are already deployed and which do not feature the latest unique password protection, remain vulnerable. In most of them the original username and password, which is common for a large number of devices of the same type, is still valid. Rectifying this situation is cumbersome, because when protecting the gateways with a device-specific password, this password must be provided to the user.

### SUMMARY OF THE INVENTION

The present invention provides a method of accessing a network device through a login page that prevents attacks from a remote attacker. Indicator-based access control in accordance with the present invention provides device-specific access control. It is even conceivable to use the indicator-based access control without requiring a device-specific password configuration.

The expressions 'port' and 'interface' are used interchangeably throughout this specification, unless indicated or obvious from the context.

A method of accessing a first network device from a second network device in accordance with an embodiment of the invention includes the first network device providing, in response to a request from the second network device, a login page that can be displayed in a browser program, executed on the second network device. The login page has input fields for entering information about the states of indicators visibly provided at a housing of the first network device. Once the states of the indicators are entered, the login page would have a submission function to submit this information to the first network device. The first network device, upon providing the login page after receiving a corresponding request from the second network device, controls the states of the indicators to show a first, non-predictable random pattern. The random pattern shown by the indicators is entered, by a user, into the corresponding fields provided on the login page which is displayed by the browser program on the second network device. The first network device receives an input representing the states of the indicators as entered by the user and submitted through the submit function of the login page. The first network device then compares the received states of the indicators with the first random pattern. Access to the first network device is granted when the first random pattern and the received input representing the states of the indicators match. Otherwise, the login attempt is rejected.

In an embodiment of the invention the indicators are indicator lights, for example LEDs, and the indicator states forming the first pattern include one or more of lights being switched on, switched off, the colour of the lights, and lights blinking at one or more frequencies, e.g. fast and slow.

A login page in accordance with the invention may include check boxes for entering the indicator states. Individual check boxes for states like 'on', 'off', 'blinking' or the color may be provided for each indicator. However, it is also conceivable to use a drop down menu for each indicator, from which a user has to select a proper state. In the latter case, multiple rows of selection boxes may be provided on a login page, for entering subsequently displayed random pattern.

In another embodiment of the invention, the indicators include a graphical display, and the indicator states forming the first pattern include one or more of a graphical patterns, representing geometrical shapes, alphanumeric characters, and linear and two-dimensional bar codes.

In a development of the preceding embodiment of the invention the login page is adapted to receive an image for upload to the first network device. For example, the image is a QR code or a bar code that is photographed by the user and then uploaded to the first network device via the login page. The QR code or bar code, or a general pattern is shown on the graphical display of the device and can be captured by a camera that is connected to the second network device. The camera can be connected permanently or only for the purpose of transferring the captured image. The latter case is useful for users taking an image with a smartphone and sending the image to the second network device via a wired or wireless connection, including USB, Bluetooth and IEEE 802.11, aka WiFi. It is also conceivable to call the login page on the second network device and upload the image to the first network device directly from the smartphone that was used for taking the picture. Preferably, in this case the smartphone was previously paired with the first network device. This implementation resembles a kind of two-factor authentication and provides further improved security. Decoding of the photographed graphical pattern may also be done in the second network device. In this case only the decoded data conveyed through the pattern is sent back to the first network device.

Granting access in accordance with any one of the preceding embodiments may require entering a username and password into a further login page, which is provided after the correct pattern had been entered. Additionally or alternatively two or more pattern need to be entered successively before access is granted.

A method of accessing a first network device from a second device includes, at the second network device, accessing a login page provided by the first network device through a browser program executed on the second network device. The user must enter in the login page a pattern as shown on the housing of the first network device. Once entered, the data entered on the login page can be submitted to the first network device.

In case indicator lights showing different colours are used, an option is provided not to use the colour of the indicators as a differentiator. This option may be particularly advantageous for colour-blind persons. In order to compensate for the reduced number of options for the displayed pattern, the number of pattern to be entered before granting access may be increased.

Generally, the number of required patterns the user must enter before being able to authenticate successfully depends on the desired level of security and perceived user-friendliness. In case a higher level of security is desired, more random patterns must be correctly entered before access is eventually granted than would be required for a lower level of security.

The respective states of the indicators are random, e.g. in response to a random number provided by a random number generator. A random number generator may be implemented by a software routine, e.g. /dev/random or /dev/urandom in Linux-based operating systems, can be implemented in hardware or a combination of both, e.g. a hardware random number generator, feeding the entropy pool used as input for a pseudo-random number generator implemented in software. It is also conceivable to obtain a random number from a remote network device through a network connection. For each pattern, the random number will be converted to x possible values. This can be done for example by applying a 'MOD x' operation to the random number. Obviously the random number must be large enough in order to ensure the outcome of 'MOD x' encompasses all possible LED combinations including 'on', 'off', color codes, blinking and the like.

For the random number a high entropy is desirable. In order to provide for a high entropy, proper feeding of the entropy pool is required. For network devices supporting a cryptographic engine, e.g. 'IPSec HW crypto' engine, a HW-based entropy source can be used to feed the entropy pool, possibly mixed with other random data.

Network devices lacking a hardware crypto feature may rely on other entropy sources like clock drift, hardware timers and the like.

In one embodiment of the invention the inventive method is only used as long as a user has not configured an individual username and password. The trigger event for the indicator pattern login page to appear is, for example, an HTTP status code response, requiring a user to use the indicator pattern login and subsequently define a new, unique and secure username and password combination. Alternatively, the indicator pattern login method is always activated, even in case a user has set a new username and password combination, and only when the user has configured an individual username and password he or she will be able to disable the execution of the indicator-based authentication method.

In a development in accordance with any one of the embodiments of the invention, a protection mechanism will prevent multiple users trying to login simultaneously. When one session is active, new sessions are deferred until the first times out.

In one embodiment of the invention the number of unsuccessful logins is limited to a predetermined number. When the number of unsuccessful logins has reached the predetermined number additional security measures may be engaged. For example, a user would have to enter a master username and master password, which is provided to him through a service line of the network operator or the device manufacturer. In the latter case the master username and master password may be created as a unique combination depending on the serial number of the device, which the user would have to provide. An alternative additional security measure requires pressing a physical button on the device in order to reset the number of unsuccessful logins.

In an embodiment of the invention, whenever a login attempt was unsuccessful, the time delay set to expire before the next login will be accepted is increased, also referred to as 'exponential back-off'. This prevents a remote attacker from guessing the random pattern. This embodiment may also be combined with previous embodiment, in which the number of unsuccessful logins is limited to a predetermined number.

In one embodiment of the invention the indicators include the indicators typically provided with LAN ports. LAN ports very often have one or two LEDs indicating the activity and the link speed of the port. In case a network device otherwise has very few indicators adding the one or two LEDs provided with the one or more LAN ports increases the length of the pattern and thus the security.

In a variant that can be used with any embodiment of the invention previously described, the brightness of the indicators is increased while the pattern is shown. This may alleviate the task of identifying the pattern even in well-lit environments. In a variant of the method and device in accordance with the invention a loudspeaker or a buzzer is provided with the network device, which issues a random sequence of acoustic signals, e.g. a sequence of long and short acoustic signals, or low and high tones, and which a user has to enter in a login page accordingly by entering or selecting a descriptive term. In this variant the acoustic signals takes the place of the indicators with the remaining concept of the invention being the same. Many handheld devices have built-in sound mechanisms for such a feature. An extra variant would be to play songs in an unpredictable sequence. Only when the user proves he recognizes the series of songs, the authentication process will be successful. Obviously these songs would need to be related to the user's background, e.g. culture, age, and the like.

In a variant that can be used with any embodiment of the invention previously described, the indicator-based access process in accordance with the invention can be overridden, e.g. by pressing a specific button on the device, or simultaneously pressing several buttons on the device. This may be useful in case a user needs to troubleshoot a device that does not behave normally.

It is obvious that using the method in accordance with the invention requires that the device is located in an area with limited access to the general public, e.g. in a user's home. If a network device that is generally capable of performing the method is used in an area accessible to the general public, the method in accordance with the invention may be disabled. Disabling may be done when installing the network device, e.g. by changing the default user name and password combination and subsequently disabling the indicator-based access process in the device's settings.

### BRIEF DESCRIPTION OF THE DRAWINGS

In the following section the invention will be described with reference to the attached figures, in which
- Fig. 1: shows a schematic housing example of a network device that can be used in accordance with the invention;
- Fig. 2: shows an example of a login page provided by the network device in accordance with the invention;
- Fig. 3: shows a schematic example of the housing of a network device in accordance with the invention during the display of a random pattern;
- Fig. 4: represents an exemplary login page provided by the network device filled in accordance with the random pattern of figure 3;
- Fig. 5: depicts a schematic diagram of a system comprising the network device that can be used in accordance with the invention and exemplary second network devices;
- Fig. 6: shows a flow diagram of a first aspect of a method in accordance with the invention;
- Fig. 7: shows a flow diagram of a second aspect of a method in accordance with the invention;
- Fig. 8: depicts an exemplary block diagram of a network device in accordance with the invention; and
- Fig. 9: shows a schematic exemplary functional block diagram of a network device in accordance with the invention.

### DETAILED DESCRIPTION OF EMBODIMENTS

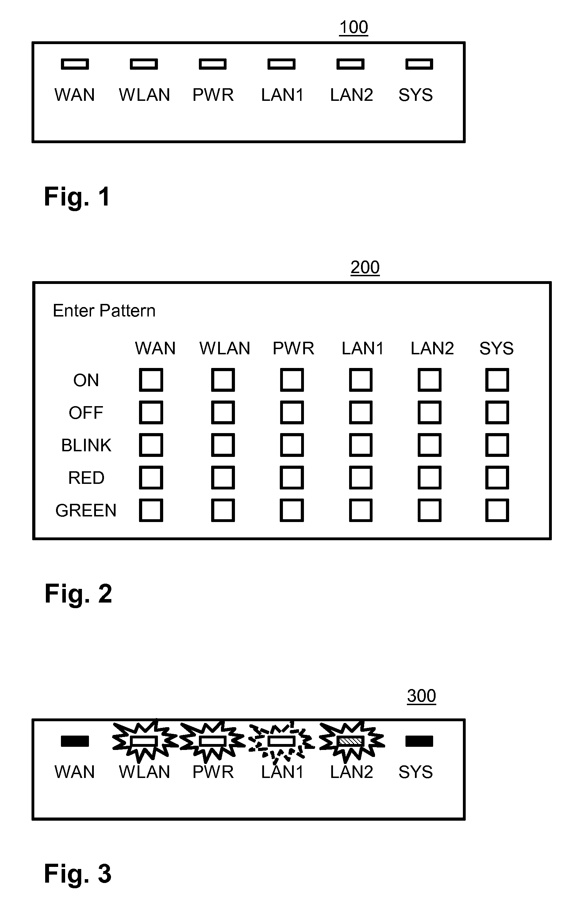

Figure 1 shows a schematic exemplary housing of a network device 100 that can be used in accordance with the invention. One or more network interfaces, wired or wireless, may be provided at the device, but are not shown in the figure. The general outer shape of the housing is irrelevant and may be other than a form of parallelepiped, i.e. other than rectangular in one or more dimensions. The network device has multiple indicators for signaling the operation or the state of a WAN interface, WLAN interface, a first and a second LAN interface LAN1 and LAN2, a general power indicator, and a SYS indicator for signaling the general system state. During normal operation each of the indicators performs as generally known to the person of ordinary skill in the art. For example, the WAN indicator may be constantly lit when the network device is attached to a WAN connection. Whenever there is data traffic the WAN indicator may be blinking or flashing. The indicators for the first and the second LAN interfaces may show the same or similar behavior as the indicators for the WAN interface. The PWR indicator may be constantly lit whenever system power is within nominal operating parameters. The SYS indicator may be constantly lit blinking depending on respective system states. Indicators may be blinking at different frequencies depending on a state to be indicated.

When a user desires to log on to the network device, he or she enters the address of the network device into a browser window. The network device will provide a login page. Figure 2 shows an exemplary login page 200 provided by the network device in accordance with the invention. Rather than requiring the user to enter username and password, the network device requires the user to enter states of the indicator lights provided at the housing of the network device. The login page provides various checkboxes for each of the indicators, allowing for entering the indicators' states. For example, the WAN indicator may be constantly on or off, or blinking. In addition, the indicator may be lit in red or green colour. The user will have to check the correct checkboxes in accordance with the states of the indicators provided at the network device's housing.

Figure 3 shows a schematic exemplary housing of a network device 300 used in accordance with the invention during display of a random pattern. In the figure, the WAN and the SYS indicators are off, represented by black rectangular shapes. The WLAN and PWR indicators as well as the LAN2 indicator are constantly lit, represented by the explosion pattern surrounding the indicator. Different colours are indicated by the rectangular shapes being empty or filled with a hash pattern, an empty rectangular shape representing green light. The LAN1 indicator is blinking, represented by the explosion pattern surrounding the indicator drawn in a broken line.

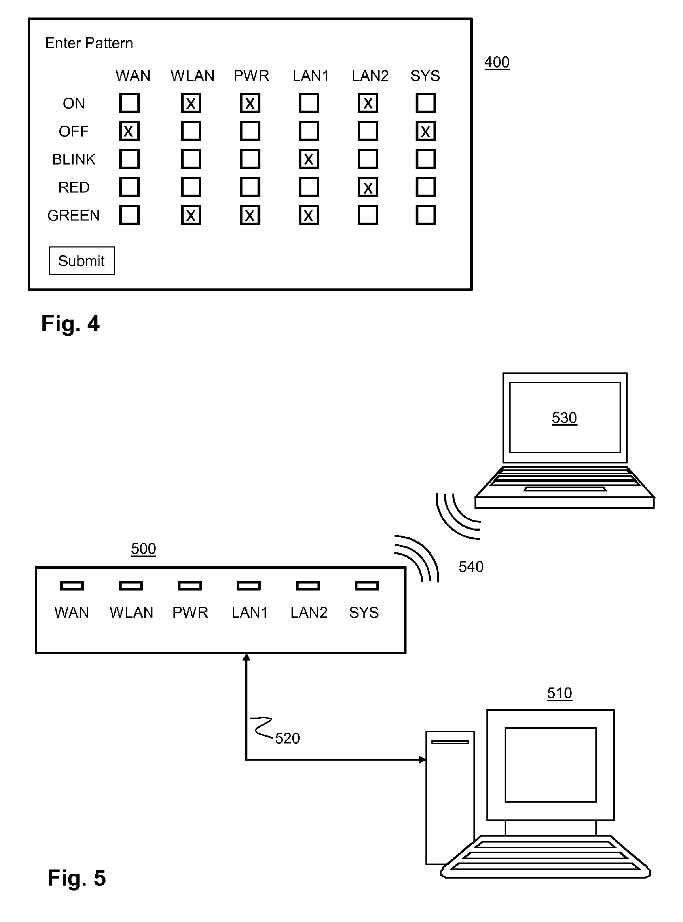

Figure 4 represents an exemplary login page 400 provided by the network device and filled in accordance with the random pattern of figure 3. In the figure, checkboxes representing the states of the indicators are checked accordingly. In addition, a submit button is shown on the screen, for submitting a pattern to the network device for checking the consistency of the entered pattern and the displayed pattern. In this figure, the submit button appeared only after a state for each indicator had been entered. It is, however, conceivable to show the submit button at the same time the login page is displayed, or to visually show it in 'grayed out' format, and only allow to click on it once all required data has been entered.

Figure 5 depicts a schematic diagram of a system comprising the network device that can be used in accordance with the invention and exemplary second network devices. Network device 500 is connected to a desktop computer 510 through a wired LAN connection 520. Laptop 530 is connected to network device 500 through a wireless connection 540. Whenever a user wants to log on to network device 500, either wirelessly or through a wired connection, network device 500 will provide a login page as shown in figure 2.

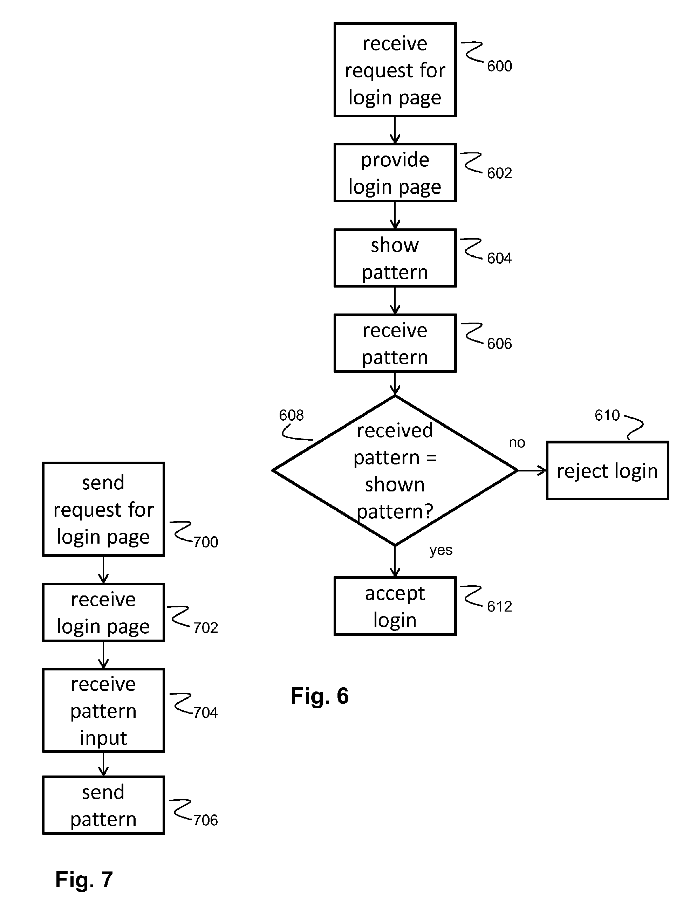

Figure 6 shows a flow diagram of a first aspect of a method in accordance with the invention. In step 600 the network device receives a request for a login page over a network connection (not shown). The request may be sent from any kind of computer, laptop or tablet or the like, running a browser, which a user might use for accessing web pages (not shown). In step 602, the network device provides the login page to the user over the network connection (not shown). After the login page has been provided to the user, in step 604 the network device controls indicators provided at the housing of the network device (not shown) to show a random pattern. As previously discussed, the random pattern may be composed of indicators being constantly lit, off, or blinking. In addition, the indicators may be lit in different colours. In step 606, a network device receives data representing the pattern as entered on the login page by the user. Once the pattern is received, in step 608 the network device compares the received pattern with the pattern shown. If the received pattern and the shown pattern do not match, the no-branch of step 608 is followed and the login attempt is rejected, step 610. When a login attempt is rejected, the user may be shown a blank login page to start over (not shown). If the received pattern and the shown pattern match, the yes-branch of step 608 is followed and the login is accepted, step 612. Accepting a login may include requesting the user to enter a username and password in a subsequent step (not shown). Also, the user may be required to enter a number of different random patterns before the login is admitted (not shown).

Figure 7 shows a flow diagram of a second aspect of a method in accordance with the invention. In step 700, a user device by means of which a user desires to logon to a network device in accordance to the invention sends a request for a login page to the network device over a network connection. In step 702, the user device receives the login page from the network device, which the user device will consequently display (not shown). In step 704, the user device receives input representing a pattern shown on the network device, in accordance with corresponding input fields of the login page. Upon receiving a user input that indicates that the login page has been filled in (not shown), the user device, in step 706, sends data representing the pattern to the network device.

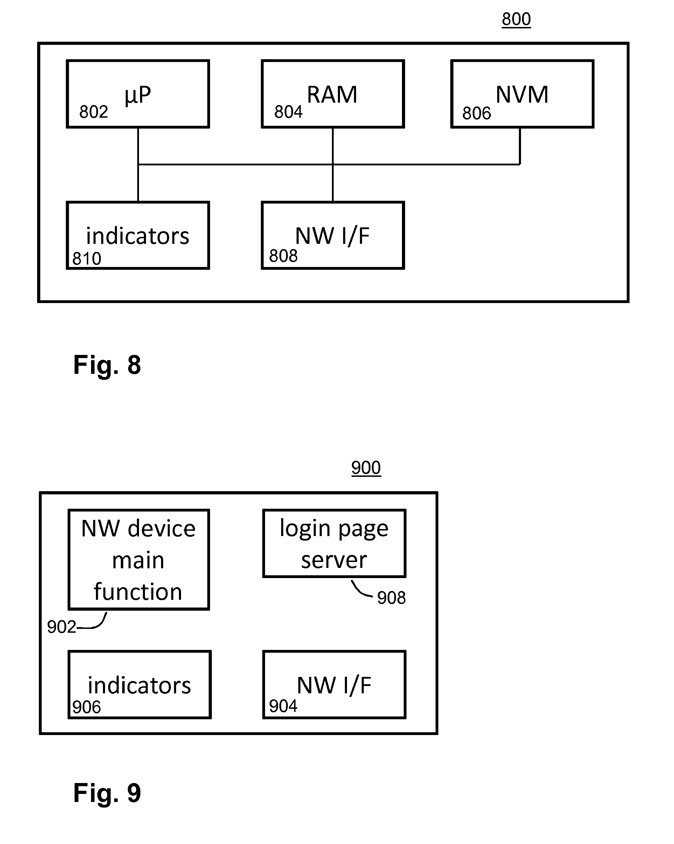

Figure 8 depicts an exemplary schematic block diagram of a network device 800 that can be used in accordance with the invention. Microprocessor 802 is connected to random access memory 804, nonvolatile memory 806, network interface 808 and indicators 810. The connection of the elements listed before includes one or more data buses and individual control lines. General elements such as a power supply and a power management unit as well as buttons or a keyboard for receiving user input are not shown in the figure. Nonvolatile memory 806 stores computer program instructions which, when executed in random access memory 804 by microprocessor 802, perform the method in accordance with the invention.

Figure 9 shows a schematic exemplary functional block diagram of a network device 900 that can be used in accordance with the invention. Block 902 performs several functions of the network device not related to the present invention, for example routing network data traffic, filtering network data traffic, serving data and the like. Block 904 performs functions in relation to one or more network interfaces. Block 906 performs functions in connection with controlling indicators provided at the housing of the network device. Block 908 performs functions required for serving a login page and for handling the login procedure. Several blocks may be connected to each other, as required by the device's functions. For example, the network device functions that are not related to the present invention may interact with functions related to one or more network interfaces, or with functions related to controlling the indicators. Similarly, the block providing functions related to serving the login page and handling the login procedure is linked to the block performing functions in relation to one or more network interfaces. For the sake of clarity the interconnections between the blocks are not shown in the figure.

### ADVANTAGES

The invention provides a simple means of assuring that a user has physical access to the network device to which access is desired. It makes advantageous use of the physical security provided by the location of the network device. This prevents remote attackers, located away from the physical location of the network device, from gaining access, since anyone who desires to access the device needs to be able to see the indicators on the device's housing.

The invention can be implemented in legacy devices which are already deployed simply by performing a software update. Very often, such software updates are centrally performed by the network operator. Thus, even users who do not know how to perform software update can benefit from the additional layer of security provided by the invention.

Dyslexic persons may not be able to read username and password from the sticker on the network device, yet will be able to copy some arbitrary pattern shown by indicators on the device to a webpage. Webpage design may be adapted for dyslexic persons, for example by providing examples on the login page showing how input fields and indicators are associated with each other, and what the various states of the indicators look like. It is even possible to show photographic representations of the indicators and the network device on the login page in order to make the operation of the device as easy as possible. Ultimately, it is even possible to embed small video files on the login page which, together with spoken instructions, explain how to gain access to the network device.

The inventive method provides additional security in those cases where a user is prompted to change username and password upon the very first login, but the user has never logged on to the network device. In this case, even when the initial default username and password are known to an attacker, the attacker still needs to have physical access to the device.

## Claims

1. A method of accessing a first network device from a second network device, including:
- the first network device providing a login page that can be displayed in a browser program executed on the second network device, wherein the login page has input fields for entering information about the states of indicators that are visibly provided at a housing of the first network device, and a submission function for submitting the information about the states of the indicators to the first network device;
- the first network device, upon providing the login page after receiving a corresponding request, controlling the states of the indicators to show a first random pattern;
- the first network device receiving an input representing the states of the indicators submitted through the submit function of the login page, and comparing the received states of the indicators with the first random pattern; wherein access is granted when the first random pattern and the received input representing the states of the indicators match.

2. The method of claim 1, wherein the indicators are indicator lights, and the indicator states forming the first pattern include one or more of lights being switched on, lights being switched off, color of the lights, and lights blinking at one or more frequencies.

3. The method of claim 1, wherein the indicators include a graphical display, and the indicator states forming the first pattern include one or more of a graphical pattern representing geometrical shapes, alphanumeric characters, and linear and two-dimensional bar codes.

4. The method of claim 3, wherein the login page is adapted to receive an image for upload to the first network device, and the pattern shown on the first network device can be captured by a camera.

5. The method of claim 1, wherein granting access includes providing a further login page adapted to receive a user name and a password.

6. The method of claim 1, wherein two or more patterns are shown subsequently, for which input is received, before granting access.

7. A method of accessing a first network device from a second network device, including:
- through a browser program executed on the second network device, accessing a login page provided by the first network device;
- entering a pattern as shown on the housing of the first network device on the login page;
- submitting the pattern to the first network device.

8. A network device (800) including a microprocessor (802), a random access memory (804), a non-volatile memory (806), a network interface (808) and state indicators (810), wherein the network device is adapted to provide a login page, and wherein the non-volatile memory stores instructions that, when executed, cause the network device to execute the method of one of claims 1 to 6.
